# EUROPÄISCHE PATENTSCHRIFT

(11) **EP 1 192 368 B1**
(45) Veröffentlichungstag und Bekanntmachung des Hinweises auf die Patenterteilung: **13.11.2002**
(21) Anmeldenummer: 00954451.1
(22) Anmeldetag: 08.07.2000
(51) Int. Cl.: F16H 47/04, F16H 61/40

(54) **LEISTUNGSVERZWEIGUNGSGETRIEBE**
POWER-SPLITTING TRANSMISSION
TRANSMISSION A DIVISION DE PUISSANCE

(30) Priorität: 14.07.1999 DE 19932806
(43) Veröffentlichungstag der Anmeldung: 03.04.2002
(73) Patentinhaber: ZF FRIEDRICHSHAFEN Aktiengesellschaft, 88038 Friedrichshafen (DE)
(72) Erfinder: PREBECK, Stefan, D-94036 Passau (DE); WALSER, Michael, D-88046 Friedrichshafen (DE)
(86) Internationale Anmeldenummer: EP0006492
(87) Internationale Veröffentlichungsnummer: WO01004515

(56) Entgegenhaltungen:
- DE-A- 2 153 960
- DE-A- 19 706 114
- US-A- 3 903 756
- US-A- 5 328 418

## Beschreibung

Die Erfindung bezieht sich auf ein Leistungsverzweigungsgetriebe mit einem hydraulischen und einem mechanischen Leistungszweig nach der im Oberbegriff von Anspruch 1 näher definierten Art.

Hydraulisch-mechanische Leistungsverzweigungsgetriebe besitzen häufig einen hydraulischen Leistungszweig, um in einem Fahrbereich das Übersetzungsverhältnis stufenlos zu verändern, und einen mechanischen Leistungszweig, mit welchem verschiedene Fahrbereiche geschaltet werden können. Beim hydraulischen Leistungszweig werden vorzugsweise in ihrem Volumen verstellbare, hydrostatische Pumpen, wie Axialkolbenpumpen, und im Volumen konstante oder verstellbare, hydrostatische Motore, wie Axialkolbenmotore, verwendet.

Die DE 195 22 833 A1 offenbart ein Leistungsverzweigungsgetriebe, bei welchem mit dem mechanischen Leistungszweig vier Vorwärts- bzw. Rückwärtsfahrbereiche geschaltet werden können, und mit dem hydraulischen Leistungszweig innerhalb dieser Fahrbereiche die Drehzahl stufenlos variiert werden kann, wobei in einem Summierungsgetriebe beide Leistungen wieder aufsummiert werden. Die verschiedenen Fahrbereiche werden beim mechanischen Leistungszweig mit Hilfe von Reibungskupplungen geschaltet, welche von hydraulischen Betätigungseinrichtungen betätigt werden. Um diese Betätigungseinrichtungen zu betätigen, wird eine nicht dargestellte Druckmittelquelle benötigt. Der hydrostatische Leistungszweig besteht aus einer in ihrem Volumen verstellbaren, hydrostatischen Pumpe, welche einen hydrostatischen Motor antreibt. Um die hydrostatische Pumpe in beiden Förderrichtungen betreiben zu können, besteht nur die Möglichkeit, die hydrostatische Pumpe mit dem hydrostatischen Motor im geschlossenen Kreis zu betreiben, d. h., daß die Forder- bzw. Ansaugöffnungen des hydrostatischen Motors mit den Förder- bzw. Ansaugöffnungen der hydrostatischen Pumpe verbunden sind. Die Leckagen, welche beim Betrieb aus diesem geschlossenen Kreis austreten, müssen über eine weitere Füllpumpe ausgeglichen werden.

Die DE 197 06 114 A1 offenbart eine Vorrichtung zur Pulsationsverminderung an einer hydrostatischen Verdrängereinheit, bei welcher die Pulsation im Druckmedium der hydrostatischen Verdrängereinheit minimiert wird, indem in der hydrostatischen Verdrängereinheit ein Speicherelement vorgesehen ist, welches die Pulsation vermindert. Speicherelemente, welche z. B. als hydropneumatische Speicher ausgebildet sind, können beim Betrieb verschleißen und müssen ausgetauscht werden können.

US-A-3 903 756 zeigt ein getriebe mit den merkmalen des Oberbegriffs des unabhängigen Anspruchs 1.

Der vorliegenden Erfindung liegt die Aufgabe zugrunde, ein Leistungsverzweigungsgetriebe mit hydraulischem Leistungszweig und mechanischem Leistungszweig zu schaffen, welches eine geringe Anzahl von Bauteilen aufweist sowie sich durch einen guten Wirkungsgrad auszeichnet.

Die Aufgabe wird mit einem, auch die kennzeichnenden Merkmale des Hauptanspruchs aufweisenden, gattungsgemäßen Leistungsverzweigungsgetriebe gelöst.

Erfindungsgemäß wird die Anzahl der Bauteile dadurch reduziert, daß das Leistungsverzweigungsgetriebe nur eine Druckmittelquelle verwendet, um die Leckagen im geschlossenen Kreis des hydraulischen Leistungszweigs auszugleichen und die Betätigungseinrichtungen der Schaltelemente des mechanischen Leistungszweigs mit Druck zu versorgen. Da die elektrohydraulische Steuerung zur Ansteuerung der Betätigungseinrichtungen der Schaltelemente des mechanischen Leistungszweigs empfindlich auf Druckschwankungen und Druckpuisationen reagiert, jedoch der hydraulische Leistungszweig durch die Verwendung von Kolbenverdrängungseinheiten Druckpulsationen erzeugt, ist es nur möglich, eine Druckmittelquelle für beide Verbraucher zu verwenden, indem eine Dämpfungseinrichtung zwischen der Druckmittelquelle und dem hydraulischen Leistungszweig vorhanden ist. Diese Dämpfungseinrichtung ist vorzugsweise in der Nähe des Erzeugers, d. h. des hydraulischen Leistungszweiges, anzuordnen, kann jedoch auch an jeder anderen Stelle im Getriebe vorgesehen werden. Wird die Dämpfungseinrichtung unmittelbar beim Schwingungserzeuger angebracht, d. h. im Gehäuse der hydrostatischen Verdrängereinheit, so wird eine optimale Wirkung der Dämpfungseinrichtung erreicht und die hydrostatische Verdrängereinheit kann schwingungsgedämpft im Gehäuse des Leistungsverzweigungsgetriebes angeordnet werden. Die Dämpfungseinrichtung besteht vorzugsweise aus einem Raum, welcher eine Vergrößerung des Volumens darstellt und somit die Druckpulsationen vermindert. Da diese Dämpfungseinrichtung ausschließlich aus einer Erweiterung des Volumens in der Leitung zwischen der Druckmittelquelle und dem hydraulischen Leistungszweig besteht, gibt es in der Dämpfungseinrichtung keine Bauteile, welche dem Verschleiß unterliegen und ausgetauscht werden müssen. Der Raum, welcher eine Volumenerweiterung darstellt, kann auch in das Gehäuse des Leistungsverzweigungsgetriebes eingegossen sein, wodurch eine zusätzliche Reduktion der Teileanzahl erreicht wird. Zusätzlich kann auch die Leitung von der Druckmittelquelle zum hydraulischen Leistungszweig im Gehäuse des Leistungsverzweigungsgetriebes eingegossen sein. Es ist jedoch auch möglich, die Leitung von der Druckmittelquelle zum hydraulischen Leistungszweig als Rohrleitung auszuführen und die Dämpfungseinrichtung als ein im Durchmesser erweitertes Rohrleitungsstück auszubilden.

Indem nur eine Druckmittelquelle sowohl über eine Steuerung die Betätigungseinrichtungen der Schaltelemente des mechanischen Leistungszweigs mit Druck versorgt als auch die Leckagen im hydraulischen Leistungszweig ausgleicht, wird die Anzahl der Teile im Leistungsverzweigungsgetriebe reduziert und der Wirkungsgrad erhöht.

Weitere Merkmale sind der Figuren-Beschreibung zu entnehmen.

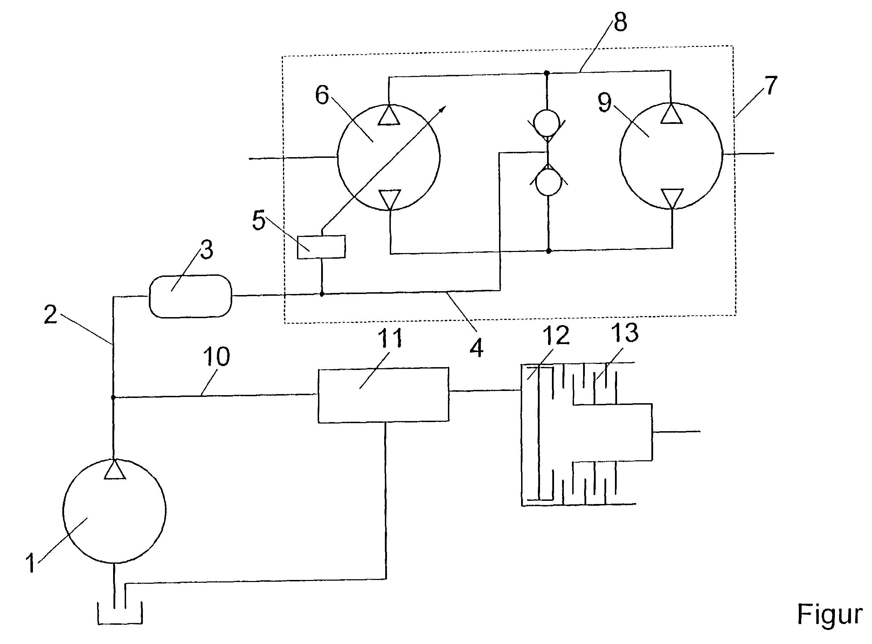

Die einzige Figur zeigt ein stark vereinfachtes Schema der hydraulischen Druckversorgung in einem Leistungsverzweigungsgetriebe, bei welchem eine Druckmittelquelle 1 Druckmittel über eine Leitung 2 zu einer Dämpfungseinrichtung 3 fördert. Von der Dämpfungseinrichtung 3 gelangt das Druckmittel über eine Leitung 4 zu einer Steuereinheit 5, mit welcher das Fördervolumen einer hydrostatischen Pumpe 6 eines hydraulischen Leistungszweigs 7 verstellt wird. Gleichzeitig gelangt über die Leitung 4 Druckmittel in den geschlossenen Kreis 8, welcher durch die Verbindung von einem hydrostatischen Motor 9 und der hydrostatischen Pumpe 6 gebildet wird. Indem Druckmittel über die Leitung 4 in den geschlossenen Kreis 8 gelangt, kann die Leckage im geschlossenen Kreis ausgeglichen werden. Die Druckpulsation, welche im hydraulischen Leistungszweig 7 entsteht, wird durch die Dämpfungseinrichtung 3 gemindert, so daß in der Leitung 10, welche zu einer Steuereinheit 11 führt, Druckmittel mit nur geringer Druckpulsation gefördert wird. Über die Steuereinheit 11 wird eine oder mehrere Betätigungseinrichtung(en) 12 eines oder mehrerer Schaltelements(e) 13 des mechanischen Leistungszweiges betätigt. Mit den Schaltelementen 13 werden unterschiedliche Übersetzungen des mechanischen Leistungszweiges geschaltet. Somit können mit einer Druckmittelquelle 1 sowohl die Schalteinrichtungen des mechanischen Leistungszweiges als auch der geschlossene Kreis 8 mit Druckmittel versorgt werden.

### Bezugszeichen

- 1: Druckmittelquelle
- 2: Leitung
- 3: Dämpfungseinrichtung
- 4: Leitung
- 5: Steuereinheit
- 6: hydrostatische Pumpe
- 7: hydraulischer Leistungszweig
- 8: geschlossener Kreis
- 9: hydrostatischer Motor
- 10: Leitung
- 11: Steuereinheit
- 12: Betätigungseinrichtung
- 13: Schaltelement

## Patentansprüche

1. Leistungsverzweigungsgetriebe mit einem hydraulischen Leistungszweig (7) und einem mechanischen Leistungszweig, bei welchem der mechanische Leistungszweig hydraulisch betätigbare Schaltelemente (13) aufweist, und der hydraulische Leistungszweig einen hydraulischen Motor (9) und eine hydraulische Pumpe (6) aufweist, wobei die Förder- bzw. Ansaugöffnungen des hydraulischen Motors (9) mit den Förder- bzw. Ansaugöffnungen der hydraulischen Pumpe (6) verbunden sind und eine Druckmittelquelle (1) sowohl die Leckagen im hydraulischen Leistungszweig (7) ausgleicht als auch die Betätigung der Schaltelemente (13) des mechanischen Leistungszweigs über eine Steuereinrichtung (11) mit Druck beaufschlagt, **dadurch gekennzeichnet, daß** zwischen der Druckmittelquelle (1) und dem hydraulischen Leistungszweig (7) eine Dämpfungseinrichtung (3) vorhanden ist, welche ausschließlich aus einer Volumenerweiterung besteht.

2. Leistungsverzweigungsgetriebe nach Anspruch 1, **dadurch gekennzeichnet , daß** die Dämpfungseinrichtung (3) aus einer Volumenerweiterung einer Leitung (2) zwischen der Druckmittelquelle (1) und dem hydraulischen Leistungszweig (7) besteht, welche dem hydraulischen Leistungszweig (7) benachbart angeordnet ist.

3. Leistungsverzweigungsgetriebe nach Anspruch 1, **dadurch gekennzeichnet, daß** die Leitung (2) zwischen der Druckmittelquelle (1) und dem hydraulischen Leistungszweig (7) größtenteils in einem Getriebegehäuse verläuft.

4. Leistungsverzweigungsgetriebe nach Anspruch 1, **dadurch gekennzeichnet, daß** die Dämpfungseinrichtung (3) aus einem Raum in der Wandung eines Getriebegehäuses besteht.

5. Leistungsverzweigungsgetriebe nach Anspruch 1, **dadurch gekennzeichnet, daß** die Dämpfungseinrichtung (3) aus einer Erweiterung einer Rohrleitung besteht.

6. Leistungsverzweigungsgetriebe nach Anspruch 1, **dadurch gekennzeichnet, daß** die Dämpfungseinrichtung in einem Gehäuse der hydraulischen Pumpe (6) oder des hydraulischen Motors (9) des hydraulischen Leistungszweigs (7) angeordnet ist.

## Claims

1. Power-splitting transmission having a hydraulic power branch (7) and a mechanical power branch, in which the mechanical power branch has hydraulically actuable selection elements (13) and the hydraulic power branch has a hydraulic motor (9) and a hydraulic pump (6), wherein the delivery and intake openings of the hydraulic motor (9) are connected to the delivery and intake openings of the hydraulic pump (6) and a pressure-medium source (1) both compensates for the leakages in the hydraulic power branch (7) and applies pressure to the actuating devices of the selection elements (13) of the mechanical power branch via a control device (11), **characterized in that**, between the pressure-medium source (1) and the hydraulic power branch (7), there is present a cushioning device (3) that solely comprises a volume expansion.

2. Power-splitting transmission according to Claim 1, **characterized in that** the cushioning device (3) comprises a volume expansion of a line (2) between the pressure-medium source (1) and the hydraulic power branch (7) that is disposed adjacently to the hydraulic power branch (7).

3. Power-splitting transmission according to Claim 1, **characterized in that** the line (2) between the pressure-medium source (1) and the hydraulic power branch (7) largely extends in a transmission housing.

4. Power-splitting transmission according to Claim 1, **characterized in that** the cushioning device (3) comprises a space in the wall of a transmission housing.

5. Power-splitting transmission according to Claim 1, **characterized in that** the cushioning device (3) comprises an expansion of a pipeline.

6. Power-splitting transmission according to Claim 1, **characterized in that** the cushioning device is disposed in a housing of the hydraulic pump (6) or of the hydraulic motor (9) of the hydraulic power branch (7).

## Revendications

1. Transmission à ramification de la puissance comprenant une branche de puissance hydraulique (7) et une branche de puissance mécanique, dans laquelle la branche de puissance mécanique comporte des éléments de commutation (13) pouvant être actionnés hydrauliquement et la branche de puissance hydraulique comporte un moteur hydraulique (9) et une pompe hydraulique (6), les orifices de refoulement, respectivement d'aspiration, du moteur hydraulique (9) étant reliés aux orifices de refoulement, respectivement d'aspiration, de la pompe hydraulique (6), et une source de fluide sous pression (1) a pour effet aussi bien de compenser les fuites dans la branche de puissance hydraulique (7) que d'actionner les éléments de commutation (13) de la branche de puissance mécanique, et est alimentée sous pression par l'intermédiaire d'un dispositif de commande (11), **caractérisée en ce qu'**il est prévu, entre la source de fluide sous pression (1) et la branche de puissance hydraulique (7), un dispositif d'amortissement (3) qui est exclusivement composé d'un agrandissement de volume.

2. Transmission à ramification de la puissance selon la revendication 1, **caractérisée en ce que** le dispositif d'amortissement (3) est composé d'un élargissement de volume d'une conduite (2) interposée entre la source de fluide sous pression (1) et la branche de puissance hydraulique (7), qui est disposé dans le voisinage de la branche de puissance hydraulique (7).

3. Transmission à ramification de la puissance selon la revendication 1, **caractérisée en ce que** la conduite (2), interposée entre la source de fluide sous pression (1) et la branche de puissance hydraulique (7), s'étend en majeure partie dans un carter de la transmission.

4. Transmission à ramification de la puissance selon la revendication 1, **caractérisée en ce que** le dispositif d'amortissement (3) est constitué par une chambre ménagée dans la paroi d'un carter de transmission.

5. Transmission à ramification de la puissance selon la revendication 1, **caractérisée en ce que** le dispositif d'amortissement (3) est composé d'un élargissement d'une conduite tubulaire.

6. Transmission à ramification de la puissance selon la revendication 1, **caractérisée en ce que** le dispositif d'amortissement est disposé dans un corps de la pompe hydraulique (6) ou du moteur hydraulique (9) de la branche de puissance hydraulique (7).
